# EUROPEAN PATENT APPLICATION

(11) **EP 4 421 098 A1**
(43) Date of publication of application: **28.08.2024**
(21) Application number: 22883508.8
(22) Date of filing: 14.10.2022
(51) Int. Cl.: C08F 8/00, C08F 255/02, C09J 123/26, C09J 151/06

(54) **CURABLE RESIN**

(30) Priority: 19.10.2021 JP 2021170924
(71) Applicant: Toyobo Co., Ltd., Kita-ku Osaka-shi, Osaka 530-0001 (JP)
(72) Inventor: YOSHINO, Kento, Otsu-shi, Shiga 520-0292 (JP); SASAI, Tamayo, Otsu-shi, Shiga 520-0292 (JP)
(74) Representative: Vossius & Partner Patentanwälte Rechtsanwälte mbB
(86) International application number: PCT/JP2022/038431
(87) International publication number: WO 2023/068204

(57) **Abstract**

The curable resin and the curable resin composition of the present invention have excellent handling properties in a low-temperature molten state, and have excellent adhesive strength and creep characteristics in a high-temperature environment after a curing reaction. Specifically, the invention provides a curable resin comprising a moisture-curable modified polyolefin (A) in which a moisture-curable functional group is grafted onto a polyolefin (a), the resin component having a melt viscosity at 190°C of 30000 mPa·s or less, a softening point of 70 to 160°C, and a low-molecular-weight component of 2.5 mass% or less when extracted with acetone.

## Description

### Technical Field

The present invention relates to a curable resin and a composition.

### Background Art

Hot-melt adhesives have currently been used in a wide variety of fields, including construction materials, automotive interior materials, and sealing materials for electric materials since they quickly develop adhesive strength when solidified by cooling and since they do not contain solvents. In particular, hot-melt adhesives containing olefin-based base resin have been used in a wide variety of fields due to their high level of adhesive power to olefin substrates, which are materials that are not readily adhesive.

### Citation List

### Patent Literature

PTL 1: JP2000-303047A
PTL 2: JP2010-059319A

### Summary of Invention

### Technical Problem

To improve the heat resistance of hot-melt adhesives, a base resin with a high softening point or a high molecular weight is used. Although the use of such a base resin improves adhesive strength and creep characteristics in a high-temperature environment, the application of such hot-melt adhesives requires high temperatures. In particular, when an adherend is formed of an olefin, the application of a high-temperature adhesive may cause the adherend to melt or deteriorate. To solve this problem, Patent Literature (PTL) 1 discloses using a method that uses a solvent during the coating process; however, the solvent has the problem of remaining even after drying.

PTL 2 discloses a moisture-curable hot-melt adhesive containing a silane-modified organic polymer. The silane-modified organic polymer disclosed in this document is characterized by exhibiting excellent handling properties even during application in a low-temperature environment, which does not affect substrates, and exhibiting improved heat resistance by the crosslinked structure formed by the reaction of hydrolyzable silyl groups with moisture present in the air or in the adherend after solidification by cooling. However, in recent years, olefin substrates are used in a greater variety of fields due to their features, such as low cost and low specific gravity, and there is a tendency towards a demand for a higher level of heat resistance. Therefore, the heat resistance developed by the crosslinked structure formed from hydrolyzable silyl groups disclosed in PTL 2 does not satisfy required performance.

The present invention solves the problems of known hot-melt adhesives and moisture-curable hot-melt adhesives. That is, an object of the present invention is to provide a curable resin composition that has excellent handling properties in a low-temperature molten state, which does not affect substrates, and that undergoes a rapid progress of curing reaction after solidification by cooling to thereby exhibit excellent adhesive strength and creep characteristics even in a high-temperature environment.

### Solution to Problem

After having conducted extensive research to solve the above problems, the present inventors found that the following method can produce a curable resin composition having remarkably improved handling properties in its low-temperature molten state, and remarkably improved adhesive strength and creep characteristics in a high-temperature environment after a curing reaction. The present invention has thus been completed. Specifically, the present invention comprises the following configurations.

[1] A curable resin comprising a moisture-curable modified polyolefin (A) in which a moisture-curable functional group is grafted onto a polyolefin (a),
   the resin component having
   a melt viscosity at 190°C of 30000 mPa·s or less,
   a softening point of 70 to 160°C, and
   a low-molecular-weight component content of 2.5 mass% or less when extracted with acetone.
[2] The curable resin according to [1], wherein the polyolefin (a) is a homopolypropylene or a propylene copolymer.
[3] A curable resin composition comprising the curable resin of [1] or [2] and a curing catalyst having a number average molecular weight of 1500 or more.
[4] The curable resin composition according to [3], further comprising a plasticizer having a number average molecular weight of 1500 to 100000.
[5] A hot-melt adhesive comprising the curable resin of [1] or [2] or the curable resin composition of [3] or [4].

### Advantageous Effects of Invention

The curable resin and the resin composition of the present invention have excellent handling properties in a low-temperature molten state, and excellent adhesive strength and creep characteristics in a high-temperature environment after a curing reaction.

### Brief Description of Drawings

Fig. 1 is a diagram illustrating an adhesive sample in an evaluation method for thermal creep resistance.
Fig. 2 is a diagram illustrating the relationship between a measurement sample and a weight in an evaluation method for thermal creep resistance.

### Description of Embodiments

The modified polyolefin (A) of the present invention is a polymer comprising a polyolefin (a), which constitutes the main chain skeleton, and a moisture-curable functional group bound to the polyolefin (a), which constitutes the main chain skeleton. The polyolefin onto which a moisture-curable functional group is grafted may be used alone or in a combination of two or more.

### Polyolefin (a)

Examples of the monomer components constituting the polyolefin (a) include α-olefins, such as ethylene, propylene, 1-butene, isobutene, 4-methyl-1-pentene, 1-hexene, 1-octene, 1-decene, 1-dodecene, 1-tetradecene, 1-hexadecene, 1-octadecene, and 1-eicosene.

Examples of polyolefins include homopolymers of α-olefins; ethylene-α-olefin copolymers, such as ethylene-propylene copolymers, ethylene-propylene-butylene copolymers, and ethylene-propylene-isobutylene copolymers; copolymers of an α-olefin other than ethylene and ethylene; copolymers of an α-olefin other than propylene and propylene; and copolymers of an α-olefin and other monomers copolymerizable with this α-olefin (e.g., conjugated and unconjugated dienes, such as butadiene, 1,4-hexadiene, 7-methyl-1,6-octadiene, 1,8-nonadiene, and 1,9-decadiene, and cyclic olefins, such as cyclopropene, cyclobutene, cyclopentene, norbornene, and dicyclopentadiene).

The polyolefin (a) may be crystalline polyolefin, but is preferably amorphous polyolefin or low-crystalline polyolefin. For example, the polyolefin (a) is preferably a propylene homopolymer or a propylene copolymer. The propylene copolymer is preferably an ethylene-propylene copolymer, ethylene-propylene-butylene copolymer, or ethylene-propylene-isobutylene copolymer.

The amorphous polyolefin or low-crystalline polyolefin indicates that the crystallization energy (J/g) is 50 J/g or less as measured by differential scanning calorimetry. The crystallization energy is the endothermic value determined by heating a sample from 20 to 230°C with a differential scanning calorimeter, then cooling the sample to -100°C, and further reheating the sample to 230°C at a rate of 10°C/min.

The melt viscosity at 190°C of the polyolefin (a) is preferably 30000 mPa·s or less, more preferably 28000 mPa·s or less, and most preferably 26000 mPa·s or less. If the melt viscosity at 190°C of the polyolefin is 30000 mPa·s or less, the curable resin, the curable resin composition, and a hot-melt adhesive comprising the curable resin or the curable resin composition can be easily applied to an adherend. The melt viscosity at 190°C of the polyolefin refers to the value measured in accordance with Method B in the testing methods for melt viscosity of hot-melt adhesives prescribed in JIS K 6862.

The softening point of the polyolefin (a) is preferably 70 to 180°C, more preferably 80 to 170°C, and particularly preferably 90 to 160°C. The softening point of the polyolefin is preferably 70°C or higher to allow the curing reaction after solidification by cooling of the curable resin, the curable resin composition, and a hot-melt adhesive comprising the curable resin or the curable resin composition to proceed faster. If the softening point of the polyolefin is 160°C or lower, the curable resin, the curable resin composition, and a hot-melt adhesive comprising the curable resin or the curable resin composition can be easily applied to an adherend. The softening point of a hydrolyzable silyl group-containing polyolefin refers to the value measured in accordance with the testing methods for the softening point of hot-melt adhesives prescribed in JIS K 6863.

The production method for the polyolefin (a) may be known methods. For example, the polyolefin can be produced by liquid-phase, slurry-phase, bulk-phase, or gas-phase polymerization reaction. The conditions of each polymerization reaction can be suitably set according to the state of a catalyst composition containing a zirconium compound etc. to be used (e.g., homogeneous or heterogeneous (supported form)), the production method (e.g., solution polymerization, slurry polymerization, or vapor-phase polymerization), the target polymerization results, or the form of the polymer. If the polymerization reaction is performed in a liquid or slurry form, a solvent or the olefin itself can be used as a medium. Examples of suitably used solvents include propane, butane, isobutane, pentane, hexane, octane, decane, dodecane, cyclopentane, methylcyclopentane, cyclohexane, benzene, toluene, xylene, dichloromethane, chloroethane, 1,2-dichloroethane, and chlorobenzene. These solvents can be used alone or in a combination of two or more in any ratio. To increase the productivity of the polyolefin, an impurity remover can be added, together with the catalyst composition. Examples of impurity removers include triethylaluminum. The amount of the catalyst composition in the polymerization of the polyolefin is not particularly limited and is preferably such that the central metal concentration of the catalyst composition is 10⁻⁸ to 10 mol/L, and more preferably 10⁻⁷ to 10⁻² mol/L in the reaction system used for the polymerization.

In the polymerization of the polyolefin, the polymerization temperature is not specifically limited since it can vary according to the reactants, reaction conditions, etc. The polymerization temperature is usually 60 to 110°C. For example, for solution polymerization, the polymerization temperature is preferably 0 to 250°C, and more preferably 10 to 200°C. For slurry or vapor-phase polymerization, the polymerization temperature is preferably 0 to 120°C, and more preferably 20 to 110°C. The polymerization pressure is preferably ordinary pressure to 20 MPa, and more preferably ordinary pressure to 10 MPa. The polymerization of the polyolefin can be performed in a batch, semi-continuous, or continuous mode. The molecular weight and molecular weight distribution of the final polymer produced according to such a polymerization method can be adjusted by a method of adjusting the polymerization temperature or injecting hydrogen into the reactor.

As stated above, the polyolefin preferably used in the present invention can be produced by polymerizing a single olefin monomer or two or more different olefin monomers mentioned above, together with an activator and optionally a scavenger in the presence of a chiral metallocene catalyst. Chiral metallocenes are preferably those known to support the introduction of propylene into the production of mainly isotactic polypropylene and statistically, (a single or multiple) α-olefin comonomers. The terms "metallocene" and "metallocene catalyst precursor" are known in the related technical fields to refer to a compound with transition metal M in group 4, 5, or 6, the compound having a single or multiple cyclopentadienyl (Cp) ligands that may be substituted, at least one non-cyclopentadienyl-inducing ligand X, and zero or a single heteroatom-containing ligand Y. These ligands are coordinated to M, and the number thereof corresponds to the valence. Metallocene catalyst precursors typically require activation together with a suitable co-catalyst (also called an "activation factor") to obtain active metallocene catalysts. Active metallocene catalysts refer to organometallic complexes with empty coordination sites that allow for coordination, insertion, and polymerization of olefin.

Examples of metallocene catalysts include bis(cyclopentadienyl)zirconium dichloride, bis(methylcyclopentadienyl)zirconium dichloride, bis(ethylcyclopentadienyl)zirconium dichloride, bis(isopropylcyclopentadienyl)zirconium dichloride, bis(n-propylcyclopentadienyl)zirconium dichloride, bis(n-butylcyclopentadienyl)zirconium dichloride, bis(t-butylcyclopentadienyl)zirconium dichloride, bis(thexylcyclopentadienyl)zirconium dichloride, bis(trimethylsilylcyclopentadienyl)zirconium dichloride, bis(trimethylsilylmethylcyclopentadienyl)zirconium dichloride, bis(cyclopentadienyl)zirconium chlorohydride, bis(cyclopentadienyl)methyl zirconium chloride, bis(cyclopentadienyl)ethyl zirconium chloride, bis(cyclopentadienyl)methoxy zirconium chloride, bis(cyclopentadienyl)phenyl zirconium chloride, bis(cyclopentadienyl)dimethyl zirconium, bis(cyclopentadienyl)diphenyl zirconium, bis(cyclopentadienyl)dineopentyl zirconium, bis(cyclopentadienyl)dihydrozirconium, bis(cyclopentadienyl)dimethoxyzirconium, bis(cyclopentadienyl)zirconium dichloride, trichloro(indenyl)titanium(IV), trichloro(cyclopentadienyl)titanium(IV), bis(cyclopentadienyl)zirconium chloride hydride, hafnocene dichloride, bis(butylcyclopentadienyl)zirconium(IV) dichloride, bis(propylcyclopentadienyl)hafnium(IV) dichloride, trichloro(pentamethylcyclopentadienyl)titanium(IV), µ-chlorobis(η⁵-cyclopentadienyl) (dimethylaluminum)-µ-methylene titanium, bis(pentamethylcyclopentadienyl)zirconium(IV) dichloride, bis(cyclopentadienyl)titanium dichloride, and bis(cyclopentadienyl)dimethyl titanium. Of these, bis(t-butylcyclopentadienyl)zirconium dichloride is preferred.

### Modified Polyolefin (A) onto Which Moisture-curable Functional Group Is Grafted

The modified polyolefin (A) onto which a moisture-curable functional group is grafted according to the present invention is described here.

The melt viscosity at 190°C of the modified polyolefin (A) onto which a moisture-curable functional group is grafted is 30,000 mPa·s or less, preferably 28,000 mPa·s or less, and more preferably 26,000 mPa·s or less. Further, the melt viscosity at 190°C is preferably 100 mPa·s or more, more preferably 1,500 mPa·s, and even more preferably 3,000 mPa·s or more. If the melt viscosity at 190°C of the modified polyolefin (A) is 30,000 mPa·s or less, the curable resin can be easily applied to an adherend, the curable resin composition can be easily applied to an adherend, and a hot-melt adhesive comprising the curable resin or the curable resin composition can be easily applied to an adherend. The melt viscosity at 190°C of the modified polyolefin (A) refers to the value measured in accordance with Method B in the testing methods for melt viscosity of hot-melt adhesives prescribed in JIS K 6862.

The softening point of the modified polyolefin (A) is 70 to 160°C, preferably 80 to 160°C, more preferably 90 to 160°C, and even more preferably 110 to 150°C. The softening point of the polyolefin onto which a moisture-curable functional group is grafted is preferably 70°C or higher to allow the curing reaction after solidification by cooling of the curable resin, the curable resin composition, and a hot-melt adhesive comprising the curable resin or the curable resin composition to proceed faster. If the softening point of the modified polyolefin is 160°C or lower, the curable resin, the curable resin composition, and a hot-melt adhesive comprising the curable resin or the curable resin composition can be easily applied to an adherend. The softening point of the modified polyolefin refers to the value measured in accordance with the testing methods for the softening point of hot-melt adhesives prescribed in JIS K 6863.

The storage elastic modulus at 100°C after curing of the modified polyolefin (A) is preferably 10⁴ to 10⁶ Pa. A storage elastic modulus of 10⁴ to 10⁶ Pa improves thermal creep resistance after curing and room-temperature peel strength after curing. The storage elastic modulus was determined from dynamic viscoelasticity measurements performed using a DVA-200 dynamic viscoelastic analyzer (IT Keisoku Seigyo K.K.). Dynamic viscoelasticity was measured under the following conditions.
- Temperature: -100 to 150°C (4°C/min.)
- Frequency: 10 Hz

The low-molecular-weight component contained in the modified polyolefin (A) refers to a low-molecular-weight polyolefin whose main chain has been decomposed during the grafting reaction; a by-product, such as a homopolymer of a compound having a moisture-curable functional group; or an unreacted additive. The low-molecular-weight polyolefin is formed when radicals generated on the polyolefin main chain skeleton during the grafting reaction process undergo a side reaction to cleave the main chain skeleton. The homopolymer is formed as a result of a competitive reaction with a grafting reaction with radicals.

Examples of methods of reducing the low-molecular-weight component include a formation suppression method and a removal method. The formation suppression method for low-molecular-weight polyolefins may be, for example, a means for stabilizing radicals, which are the main cause of side reactions. Examples include the formation of dormant species using a nitroxyl radical-containing compound, a reaction in a low-temperature environment, and a reaction in the presence of a compound having a large excess of an ethylenically unsaturated group and a moisture-curable functional group. The formation suppression method for the homopolymer may be a method of using a compound with low homopolymerizability by selecting an appropriate ethylenically unsaturated group or the chemical structure of a moiety other than the ethylenically unsaturated group in the compound having a moisture-curable functional group. For example, the ethylenically unsaturated group is preferably a methacrylic group or a vinyl group. Examples of the removal method include vacuum degassing and crystallization operations. These methods for reducing the low-molecular-weight may be used alone or in a combination of two or more.

The moisture-curable modified polyolefin (A) has a low-molecular-weight component of 2.5 mass% or less when extracted with acetone. The low-molecular-weight component is preferably 2.0 mass% or less, and more preferably 1.8 mass% or less. A low-molecular-weight component of 2.5 mass% or less improves adhesive strength at room temperature, adhesive strength in a high-temperature environment, and creep characteristics of the curable resin or a hot-melt adhesive comprising the curable resin after curing.

The production method for the moisture-curable modified polyolefin (A) onto which a moisture-curable functional group is grafted may be known methods. For example, typically, a silane-modified monomer, which is a compound having a moisture-curable functional group and an ethylenically unsaturated bond, can be grafted onto the polyolefin in the presence of a radical initiator etc. or by electron beam radiation.

The radical initiator is preferably, for example, at least one peroxide initiator selected from dicumyl peroxide, dit-butyl peroxide, t-butyl perbenzoate, benzoyl peroxide, cumene hydroperoxide, t-butyl peroctoate, methyl ethyl ketone peroxide, 2,5-dimethyl-2,5-di(t-butylperoxy)hexane, lauryl peroxide, t-butyl peracetate, t-butyl α-cumyl peroxide, di-t-butyl peroxide, di-t-amyl peroxide, t-amyl peroxybenzoate, 1,1-bis(t-butylperoxy)-3,3,5-trimethylcyclohexane, α,α'-bis(t-butylperoxy)-1,3-diisopropylbenzene, α,α'-bis(t-butylperoxy)-1,4-diisopropylbenzene, 2,5-bis(t-butylperoxy)-2,5-dimethylhexane, and 2,5-bis(t-butylperoxy)-2,5-dimethyl-3-hexyne. A suitable azo compound is azobisisobutyl nitrite. The radical initiator may be used alone or in a combination of two or more.

The moisture-curable modified polyolefin (A) is grafted with a compound having a moisture-curable functional group. Examples of the moisture-curable functional group include an isocyanate group or a hydrolyzable silyl group. From the viewpoint of storage stability, a hydrolyzable silyl group is preferred. From the viewpoint of reactivity control, in particular, the compound having a moisture-curable functional group for use is preferably a silane-modified monomer, which is a compound having a hydrolyzable silyl group and an ethylenically unsaturated group.

In method (iv) above, the silane-modified monomer having an ethylenically unsaturated group is represented by, for example, the following formula (1):

(X)ₙ(R)₃₋ₙ-Si-Y formula (1)

(In formula (1) above, Y represents an ethylenically unsaturated group, X represents a hydrolyzable group, R represents an alkyl group, and n represents an integer of 1 to 3).

Examples of the hydrolyzable group in formula (1) above include halogen, an alkoxy group, an alkenyloxy group, an acyloxy group, an amino group, an aminooxy group, an oxime group, and an amide group. The alkoxy group is preferably a methoxy group. The number of hydrolyzable groups bound to one silicon atom is selected from 1, 2, and 3. The hydrolyzable groups bound to one silicon atom may be of one type, or of two or more types. Furthermore, a hydrolyzable group and a non-hydrolyzable group may be bound to one silicon atom. Alkoxy groups (e.g., monoalkoxy, dialkoxy, and trialkoxy groups) are preferred as the hydrolyzable groups bound to the silicon group from the viewpoint of the ease of handling. In formula (1) above, n is preferably 3.

Examples of the ethylenically unsaturated group in the silane-modified monomer include vinyl, allyl, isopropenyl, butenyl, and cyclohexenyl. Examples also include unsaturated silanes containing both a γ-(meth)acryloxyallyl group and a hydrolyzable group, such as a hydrocarbyloxy, hydrocarbonyloxy, or hydrocarbylamino group. Acrylic and methacrylic groups are particularly preferred to achieve excellent creep characteristics at high temperatures. The silane-modified monomer may be used alone or in a combination of two or more.

The amount of the radical initiator is preferably 0.5 to 10 part by mass, more preferably 0.75 to 8 parts by mass, and particularly preferably 1 to 5 parts by mass, per 100 parts by mass of the polyolefin (a). The use of the radical initiator in an amount of 0.5 parts by mass or more allows a grafting reaction to proceed sufficiently and improves adhesive strength at room temperature, adhesive strength in a high-temperature environment, and creep characteristics of the curable resin, the curable resin composition, or a hot-melt adhesive comprising the curable resin when cured in a predetermined environment, and thus improves thermal creep resistance after curing and room-temperature peel strength after curing of the curable resin composition and a hot-melt adhesive comprising the curable resin composition. The use of the radical initiator in an amount of 10 parts by mass or less reduces side reactions, such as homopolymerization of the silane-modified monomers or decomposition reaction of the polyolefin.

The mass ratio of the radical initiator to the silane-modified monomer is preferably, but is not limited to be, such that the radical initiator:silane-modified monomer (mass ratio) is 1:0.2 to 1:10, more preferably 1:0.4 to 1:5, and particularly preferably 1:0.6 to 1:2.5. Setting the radical initiator:silane-modified monomer (mass ratio) to be in the range of 1:0.2 to 1:10 reduces side reactions, such as homopolymerization of the silane-modified monomers or decomposition reaction of the polyolefin, and improves adhesive strength at room temperature, adhesive strength in a high-temperature environment, and creep characteristics of the curable resin, the curable resin composition, or a hot-melt adhesive comprising the curable resin when cured in a predetermined environment.

In the production method for the moisture-curable modified polyolefin (A), a compound containing a stable nitroxyl radical in its molecule can optionally be used. The compound containing a nitroxyl radical is not particularly limited as long as the compound contains a stable nitroxyl radical. Examples include 2,2,6,6-tetramethylpiperidine-1-oxyl (TEMPO), N-tert-butyl-N-[a-diethlphosphono-(2,2-dimetyhylpropyl)]nitoroxide (DEPN), 2,2,d-trimethyl-4-phenyl-3-azahexane-3-nitroxide (TIPNO), N-tert-butyl-N-(1-tert-butyl-2-ethylsulfinyl)propyl nitroxide (BESN), and 2,2,10,10-tetraethylisoindolin-N-oxyl (TEDIO). Derivatives of a compound containing a nitroxyl radical can also be used. The compound containing a nitroxyl radical or its derivatives can be used alone or in a mixture of two or more.

The molar ratio of the nitroxyl radical contained in the compound containing a nitroxyl radical in its molecule to radicals generated from the radical initiator can vary and is preferably 1:0.001 to 1:1, and more preferably 1:0.01 to 1:0.1. A molar ratio of 1:0.001 to 1:1 can reduce the decomposition of the polyolefin caused by radicals generated from the radical initiator and can efficiently graft the moisture-curable functional group onto the olefin main chain skeleton.

The grafting reaction can be performed in a melt, solution, solid, or swollen state. The grafting reaction for the main skeleton of the polyolefin by using a silane-modified monomer can be performed with equipment selected from a wide range, such as a twin-screw extruder, a single-screw extruder, a Brabender, or a batch reactor (however, the equipment is not limited to these).

The curable resin of the present invention comprises the moisture-curable modified polyolefin (A), in which a moisture-curable functional group is grafted onto the polyolefin (a). The curable resin of the present invention preferably comprises the modified polyolefin (A) in an amount of 50 to 100 mass%, and may comprise an additional resin component in the range of 50 to 0 mass%, per 100 parts by mass of the curable resin. The amount of the modified polyolefin (A) is more preferably 60 to 100 mass%, still more preferably 75 to 100 mass%, and particularly preferably 90 to 100 mass%. Examples of additional resin components include unfunctionalized polyolefins and acrylic resins.

### Moisture-curing Catalyst

The curable resin composition comprising the modified polyolefin (A) as an essential component may also comprise a moisture-curing catalyst. The number average molecular weight of the moisture-curing catalyst is preferably 1500 or more, and more preferably 2000 or more. The use of a moisture-curing catalyst having a number average molecular weight of 1500 or more improves adhesive strength at room temperature, adhesive strength in a high-temperature environment, and creep characteristics of the curable resin or a hot-melt adhesive comprising the curable resin after curing in a predetermined environment.

The content of the moisture-curing catalyst is preferably 0.0001 to 10.0 parts by mass, and more preferably 0.0005 to 5.0 parts by mass, per 100 parts by mass of the curable resin composition. If the content of the moisture-curing catalyst is 0.0001 to 10.0 parts by mass per 100 parts by mass of the curable resin composition, the curable resin and a hot-melt adhesive comprising the curable resin can be easily applied to an adherend.

The moisture-curing catalyst is not particularly limited as long as the dehydration condensation reaction of the hydrolyzable silyl groups in the modified polyolefin can be accelerated. Examples include organic bases, organic acids, carboxylic acids, and organic metal compounds (including organotitanates and complexes, or carboxylates of lead, cobalt, iron, nickel, zinc, tin, etc.). Examples of organic bases include tertiary amines. Examples of organic metals for use include dibutyltin dilaurate, dioctyltin maleate, dibutyltin diacetate, dibutyltin dioctate, stannous acetate, stannous octanoate, lead naphthenate, zinc caprylate, and cobalt naphthenate. The moisture-curing catalyst may be used alone or in combination of two or more.

### Plasticizer

The curable resin composition may also comprise a plasticizer. The amount of the plasticizer when used is preferably less than 50 mass%, more preferably less than 40 mass%, and even more preferably less than 30 mass%, per 100 parts by mass of the curable resin composition. The number average molecular weight of the plasticizer is preferably 1,500 to 100,000, and more preferably 2,000 to 80,000. The use of a plasticizer having a number average molecular weight of 1500 or more improves adhesive strength at room temperature, adhesive strength in a high-temperature environment, and creep characteristics of the curable resin or a hot-melt adhesive comprising the curable resin after curing in a predetermined environment. If the number average molecular weight of the plasticizer is 100,000 or less, the curable resin composition and a hot-melt adhesive comprising the curable resin composition can be easily applied to an adherend. Plasticizers show compatibility with the curable resin. Examples of plasticizers that can be suitably used include polyesters, acrylic polymers, polyols, polyurethanes, and α-olefin copolymers. Useful examples include, but are not limited to, ARUFON (registered trademark) US-6000 series from Toagosei Co., Ltd., Aerafin (registered trademark) 17 Polymer from Eastman Chemical Co., Ltd., P1302 and PPA330T from Clariant AG, and Polyester plasticizers D623, D643, and D645 from J-PLUS Co., Ltd.

### Tackifier

The curable resin composition may comprise one or more tackifiers. The content of the tackifier when used is preferably less than 50 mass%, more preferably less than 40 mass%, and even more preferably less than 35 mass%, per 100 parts by mass of the curable resin composition. Examples of tackifiers include, but are not limited to, aliphatic, alicyclic, or aromatic hydrocarbons, modified hydrocarbons, and hydrogenated versions thereof; terpenes, modified terpenes, and hydrogenated versions thereof; rosins, rosin derivatives, and hydrogenated versions thereof; and mixtures of these. Useful examples include Eastotac (registered trademark) H-100, H-115, H130, and H142, which are partially hydrogenated alicyclic petroleum hydrocarbon resins from Eastman Chemical Company. Other useful tackifying resins include Escorez (registered trademark) 5300, 5637, and 5400, partially hydrogenated alicyclic petroleum hydrocarbon resins, Escorez (registered trademark) 5600, and partially hydrogenated aromatic modified petroleum hydrocarbon resins from ExxonMobil Chemical Co. Other tackifying resins include Wingtack (registered trademark) Extra, which is an aliphatic, aromatic petroleum hydrocarbon resin available from Goodyear Chemical Co.; Hercolite (registered trademark) 2100, partially hydrogenated alicyclic petroleum hydrocarbon resins; and Zonatac (registered trademark) 105 and 501 Lite, which are styrenated terpene resins produced from d-limonene and available from Arizona Chemical Co. in Panama City, Florida.

### Wax

The curable resin composition of the present invention can comprise at least one type of wax. The content of the wax is not particularly limited. Specifically, the wax can be used in an amount of less than 30 parts by mass, preferably less than 20 parts by mass, and more preferably less than 15 parts by mass, per 100 parts by mass of the curable resin composition. Examples of the wax contained in the curable resin composition of the present invention include paraffinic wax, microcrystalline wax, high-density, low-molecular-weight polyethylene wax, pyrolytic wax, by-product polyethylene wax, Fischer-Tropsch wax, oxidized Fischer-Tropsch wax, and functionalized wax (e.g., hydroxystearamide wax and fatty amide wax). These can be suitably combined. It is common in the related fields to use the technical term "synthetic high-melting-point wax," encompassing high-density, low-molecular-weight polyethylene wax, by-product polyethylene wax, and Fischer-Tropsch wax among the types of wax mentioned above.

### Antioxidant

A stabilizer and an antioxidant can be added to protect the adhesive from degradation due to a reaction with oxygen, induced by things like heat, light, or a residual catalyst from starting materials. Such antioxidants include Irganox (registered trademark) 565, 1010, and 1076, which are hindered phenolic antioxidants commercially available from Ciba-Geigy in Hawthorne, New York. These antioxidants are primary antioxidants that act as a free radical scavenger and can be used alone. These antioxidants can also be used in combination with another antioxidant (e.g., a phosphite antioxidant, such as Irgafos (registered trademark) 168, available from Ciba-Geigy). Phosphite antioxidants are considered to be secondary antioxidants, which are typically not used alone, and are used mainly as a peroxide decomposer. Examples of other usable antioxidants include, but are not limited to, Cyanox (registered trademark) LTDP, available from Cytec Industries in Stamford, Connecticut, and Ethanox (registered trademark) 1330, available from Albemarle Corp. in Baton Rouge, Louisiana. Various other antioxidants may be used alone or in a combination with other such antioxidants. The content of the antioxidant when used is preferably less than 0.5 mass%, and more preferably less than 0.2 mass%, per 100 parts by mass of the curable resin composition.

### Examples

The present invention is more specifically described below with reference to Examples. However, the present invention is not limited to these Examples. Each measurement was performed according to the following methods.

### 1) Measurement of Melt Viscosity

A value measured in accordance with Method B in the testing methods for melt viscosity of hot-melt adhesives prescribed in JIS K 6862 was defined as the melt viscosity.

### 2) Measurement of Softening Point

A value measured in accordance with the testing methods for the softening point of hot-melt adhesives prescribed in JIS K 6863 was defined as the softening point.

### 3) Measurement of Number Average Molecular Weight

The number average molecular weights of the curing catalyst and plasticizer were measured by GPC (gel permeation chromatography, according to DIN 55 672).

### 3) Ratio of Low-molecular-weight Component

The modified polyolefin was formed into a powder with a freeze crusher, and 5.0 g of the resulting product was collected. The initial weight of a flask for extract collection was measured. The collected modified polyolefin was introduced into a cylindrical cellulose filter, and Soxhlet extraction was performed at 90°C for 2 hours using 110 ml of acetone introduced into the flask for extract collection. After 2 hours had elapsed, the extract was evaporated to dryness by using an evaporator, and the weight of the flask after the extraction operation was measured. The amount of the low-molecular-weight component, which is an acetone extract, was determined by measuring the weight of the flask before and after the Soxhlet extraction. The ratio of the low-molecular-weight component was obtained by dividing the amount of the low-molecular-weight component by the amount of the modified polyolefin subjected to Soxhlet extraction.

### 4) Evaluation of Handling Properties

For the produced curable resin compositions, a value measured in accordance with Method B in the testing methods for melt viscosity of hot-melt adhesives prescribed in JIS K 6862 was defined as the melt viscosity. The curable resin composition having a melt viscosity at 140°C of 30000 mPa·s or less was rated "A," the curable resin composition having a melt viscosity at 140°C of 30001 to 50000 mPa·s or less was rated "B," and the curable resin composition having a melt viscosity at 140°C of 50001 mPa·s or more was rated "C."

### 5) Adhesive Strength at 20°C

The produced curable resin compositions were each formed into a film by applying a pressure of 10 MPa for 30 seconds at 140°C by using a 200-pm spacer to obtain film samples. The obtained film samples were each cut to a piece with a width of 25 mm and a length of 50 mm. Each cut sample was placed, together with a 100-µm spacer, between adherend 1 and adherend 2 below, and a pressure of 1 MPa was applied for 10 seconds at 140°C to prepare adhesive samples. The prepared adhesive samples were allowed to stand with warm water at 60°C for 7 days for curing, followed by aging for 1 day at 23°C and 50% RH to obtain samples for measurement. The samples for measurement were measured for 180° peel adhesion strength at 20°C at a peel rate of 300 mm/min to determine the adhesive strength at 20°C. The sample having an adhesive strength at 20°C of 3.0 N/25 mm or more was rated "A," and the sample having an adhesive strength at 20°C of less than 3.0 N/25 mm was rated "B."

An SA-302 tabletop test press from Tester Sangyo Co., Ltd., was used for film formation and adhesion.
Adherend 1: PP board (thickness: 2 mm)
Adherend 2: CPP film (thickness: 80 pm)

### 6) Adhesive Strength at 80°C

First, samples for measurement were obtained through the same process as in the "6) Adhesive Strength at 20°C" section above. Next, the samples for measurement were measured for 180° peel adhesion strength at 80°C at a peel rate of 300 mm/min to determine the adhesive strength at 80°C. The sample having an adhesive strength at 80°C of 3.0 N/25 mm or more was rated "A", and the sample having an adhesive strength at 80°C of less than 3.0 N/25 mm was rated "B." Table 2 shows the measurement results. The film samples and adhesive samples were prepared using an SA-302 tabletop test press from Tester Sangyo Co., Ltd., and using a PP board (thickness: 2 mm) as adherend 1 and a CPP film (thickness: 80 um) as adherend 2.

The curing catalysts and plasticizers shown in Table 2 are as follows.

### Curing catalyst

- Neostann U-100 (dibutyltin dilaurate, produced by Nitto Kasei Co., Ltd., molecular weight: less than 1,500)
- JEFFAMINE M-2005 (a long-chain amine compound, produced by Tomoe Kogyo Co., Ltd., molecular weight MW: 2,000)
- Maleic anhydride-modified polyolefin (a propylene-butene copolymer, number average molecular weight: 15,000)

### Plasticizer

- ARUFON (registered trademark) US-6150 (a hydrolyzable silyl group-containing acrylic resin, produced by Toagosei Co., Ltd.)
- PPA330T (an α-olefin copolymer, produced by Clariant AG)

### 7) Measurement of Thermal Creep Resistance

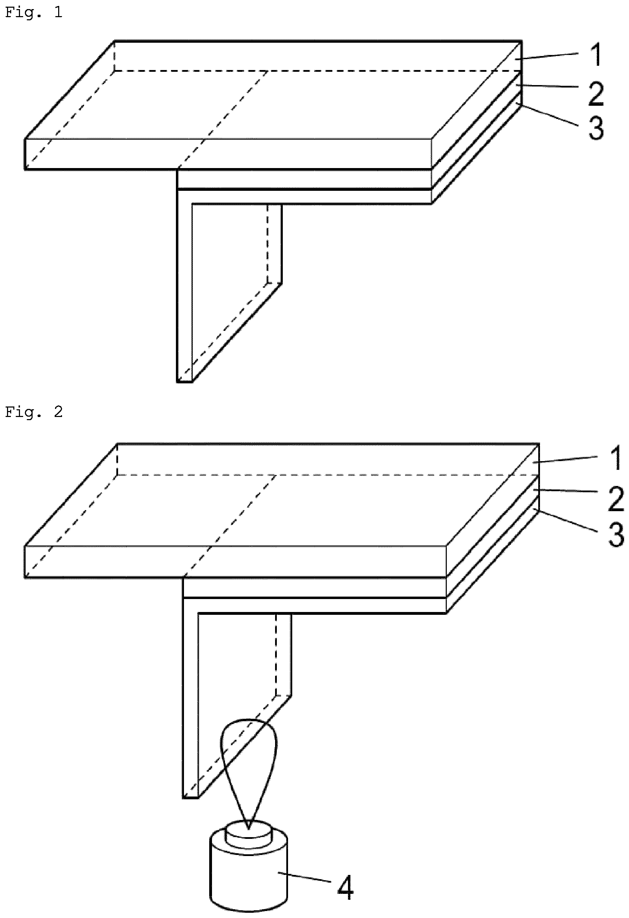

The produced curable resin compositions were each formed into a film at 140°C by using a 200-pm spacer by allowing them to stand for 30 seconds and then applying a pressure of 10 MPa for 30 seconds to obtain film samples. The obtained film samples were each cut to a piece with a width of 25 mm and a length of 25 mm. Each cut sample was placed, together with a 100-µm spacer, between adherend 1 and adherend 2 below, and a pressure of 1 MPa was applied for 10 seconds at 140°C to prepare adhesive samples (Fig. 1). The prepared adhesive samples were cured with warm water at 60°C for 7 days, followed by aging for 1 day at 23°C and 50% RH to obtain samples for measurement. A weight was placed such that a load of 100 g was applied vertically with respect to the end portion of the adhesive surface of the measurement sample at each temperature for thermal creep resistance shown in Table 2 to measure the thermal creep resistance (Fig. 2). After 24 hours had elapsed at each temperature for "Thermal creep resistance" shown in Table 2, if the peel length on the adhesive surface was less than 10 mm, the measurement sample was rated "A," and if the peel length was 10 mm or more, the measurement sample was rated "B." (Specifically, for example, the peel length on the adhesive surface of the measurement sample after 24 hours at 100°C was evaluated as the thermal creep resistance (100°C).)

### Production of Modified Polyolefins A-1 to A-7

Silane-modified polyolefins were produced using polyolefins a-1 to a-7 shown in Table 1. The melt viscosity at 190°C and softening point of the silane-modified polyolefins are as shown in Table 1.

**Table 1**

| Polyolefin | a-1 | a-2 | a-3 | a-4 | a-5 | a-6 |
|---|---|---|---|---|---|---|
| | Homo PP | Homo PP | Homo PP | Propylene copolymer | | |
| | | | a-1/a-2 (weight ratio: 70/30) | (propylene-ethylene copolymer) | | |
| Melt viscosity (190°C) /mPa·s | 8000 | 1000 | 6000 | 17500 | 80000 | 20000 |
| Softening point/°C | 90 | 150 | 140 | 125 | 120 | 170 |

### Production of Modified Polyolefin (A)

### Production of Silane-modified Polyolefin A-1

The polyolefin a-1, as well as 1.5 parts by mass of KBM-503 (3-methacryloxypropyltrimethoxysilane, produced by Shin-Etsu Polymer Co., Ltd.) and 1.5 parts by mass of Perbutyl I (t-butylperoxy isopropyl monocarbonate, produced by NOF Corporation), per 100 parts by mass of the polyolefin a-1, were added simultaneously to the feed port of a twin-screw extruder (Technovel Corporation, KZW15TW-45/60MG-NH(-2200), screw outer diameter: 15 mm, LID = 45). In the twin-screw extruder, the additives were allowed to react with the polyolefin a-1, thereby obtaining a modified polyolefin A-1. The operation conditions of the twin-screw extruder were set such that the barrel temperature was 160°C and the extrusion amount was 1.0 to 1.5 kg/hour. The end portion of the twin-screw extruder was placed in a reduced-pressure environment (vacuum degassing) to remove some of the unreacted additives and by-products.

Silane-modified polyolefins A-2 to A-4 and A-12 to A-14 were produced in the same manner as in the production of the silane-modified polyolefin A-1, except that the polyolefin (a), peroxide, silane-modified monomer, and amounts were as shown in Table 2.

### Production of Silane-modified Polyolefin A-5

The polyolefin a-1, as well as 1.5 parts by mass of KBM-503 (3-methacryloxypropyltrimethoxysilane, produced by Shin-Etsu Polymer Co., Ltd.) and 1.5 parts by mass of Perbutyl I (t-butylperoxy isopropyl monocarbonate, produced by NOF Corporation), per 100 parts by mass of the polyolefin a-1, were introduced into a synthesis furnace, and the mixture was reacted in a nitrogen atmosphere at 140°C until the amount of Perbutyl I was 0.1 mass% or less relative to the initial addition amount, thereby obtaining a modified polyolefin A-5.

A silane-modified polyolefin A-11 was obtained through the same process as for the modified polyolefin A-5, except that the grafting reaction temperature was set as shown in Table 2.

### Production of Silane-modified Polyolefin A-6

The polyolefin a-1, 1.5 parts by mass of KBM-503 (3-methacryloxypropyltrimethoxysilane, produced by Shin-Etsu Polymer Co., Ltd.) and 1.5 parts by mass of Perbutyl I (t-butylperoxy isopropyl monocarbonate, produced by NOF Corporation), per 100 parts by mass of the polyolefin a-1, and 2,2,6,6-tetramethylpiperidine-1-oxyl (TEMPO) in such an amount that the molar ratio of radicals generated from Perbutyl I to the nitroxyl radical contained in TEMPO was 0.75, were added simultaneously to the feed port of a twin-screw extruder (Technovel Corporation, KZW15TW-45/60MG-NH(-2200), screw outer diameter: 15 mm, LID = 45). In the twin-screw extruder, the additives were allowed to react with the polyolefin a-1, thereby obtaining a modified polyolefin A-6. The operation conditions of the twin-screw extruder were set such that the barrel temperature was 160°C and the extrusion amount was 1.0 to 1.5 kg/hour.

### Production of Silane-modified Polyolefin A-7

The polyolefin a-1, as well as 1.5 parts by mass of KBM-503 (3-methacryloxypropyltrimethoxysilane, produced by Shin-Etsu Polymer Co., Ltd.) and 1.5 parts by mass of Perbutyl I (t-butylperoxy isopropyl monocarbonate, produced by NOF Corporation), per 100 parts by mass of the polyolefin a-1, were added simultaneously to the feed port of a twin-screw extruder (Technovel Corporation, KZW15TW-45/60MG-NH(-2200), screw outer diameter: 15 mm, LID = 45). In the twin-screw extruder, the additives were allowed to react with the polyolefin a-1, thereby obtaining a silane-modified polyolefin. The operation conditions of the twin-screw extruder were set such that the barrel temperature was 160°C and the extrusion amount was 1.0 to 1.5 kg/hour.

### i) Washing

The silane-modified polyolefin was added to a mixed solvent of methyl ethyl ketone (MEK) and toluene in a mass ratio of 60:40 so that the solids content was 30 mass%. After dissolution at 80°C or lower, the mixture was stirred for 1 hour.

### ii) Crystallization

One hour later, the silane-modified polyolefin solution was cooled at room temperature to 25°C while stirring was continued to crystallize the silane-modified polyolefin.

### iii) Filtration

The crystallized silane-modified polyolefin was allowed to stand for 1 hour, and the precipitate was collected by filtration.

Operations i) to iii) above were performed twice (solvent washing was performed).

The final precipitate was dried under reduced pressure at 60°C for 12 hours to obtain a crystallized silane-modified polyolefin A-7.

### Production of Silane-modified Polyolefin A-8

The polyolefin a-1, 1.5 parts by mass of KBM-503 (3-methacryloxypropyltrimethoxysilane, produced by Shin-Etsu Polymer Co., Ltd.), 1.5 parts by mass of Perbutyl I (t-butylperoxy isopropyl monocarbonate, produced by NOF Corporation), per 100 parts by mass of the polyolefin a-1, and 2,2,6,6-tetramethylpiperidine-1-oxyl (TEMPO) in such an amount that the molar ratio of radicals generated from Perbutyl I to the nitroxyl radical contained in TEMPO was 0.75, were added simultaneously to the feed port of a twin-screw extruder (Technovel Corporation, KZW15TW-45/60MG-NH(-2200), screw outer diameter: 15 mm, LID = 45). In the twin-screw extruder, the additives were allowed to react with the polyolefin a-1, thereby obtaining a modified polyolefin A-8. The operation conditions of the twin-screw extruder were set such that the barrel temperature was 160°C and the extrusion amount was 1.0 to 1.5 kg/hour. The end portion of the twin-screw extruder was placed in a reduced-pressure environment (vacuum degassing) to remove some of the unreacted additives and by-products.

### Production of Silane-modified Polyolefin A-9

The polyolefin a-1, as well as 0.0 parts by mass of KBM-503 (3-methacryloxypropyltrimethoxysilane, produced by Shin-Etsu Polymer Co., Ltd.) and 0.0 parts by mass of Perbutyl I (t-butylperoxy isopropyl monocarbonate, produced by NOF Corporation), per 100 parts by mass of the polyolefin a-1, were added simultaneously to the feed port of a twin-screw extruder (Technovel Corporation, KZW15TW-45/60MG-NH(-2200), screw outer diameter: 15 mm, LID = 45). In the twin-screw extruder, the additives and the polyolefin a-1 were melted and kneaded, thereby obtaining a modified polyolefin A-9. The operation conditions of the twin-screw extruder were set such that the barrel temperature was 160°C and the extrusion amount was 1.0 to 1.5 kg/hour.

A silane-modified polyolefin A-10 was obtained through the same process as for the silane-modified polyolefin A-9, except that the amounts of the peroxide and silane-modified monomer were as shown in Table 2.

### Production of Curable Resin Composition 1

After the silane-modified polyolefin A-1 was brought into a molten state at 180°C, 0.005 parts by mass of Neostann U-100 (dibutyltin dilaurate; Nitto Kasei Co., Ltd.) as a curing catalyst was added per 100 parts by mass of the modified polyolefin A-1, and the mixture was mixed for 30 minutes at 180°C using a universal stirrer to obtain a curable resin composition 1.

Curable resin compositions 2 to 10 and 13 to 18 were produced in the same manner as in the curable resin composition 1, except that the curing catalysts and the amounts were as shown in Table 2.

### Production of Curable Resin Composition 11

After the silane-modified polyolefin A-1 was brought into a molten state at 180°C, 10 parts by mass of ARUFON (registered trademark) US-6150 (hydrolyzable silyl group-containing acrylic resin, produced by Toagosei Co., Ltd.) as a plasticizer and 5 parts by mass of maleic anhydride-modified polyolefin as a curing catalyst were added per 100 parts by mass of the silane-modified polyolefin A-1, and the mixture was mixed for 30 minutes at 180°C using a universal stirrer to obtain a curable resin composition 11.

A curable resin composition 12 was produced in the same manner as the curable resin composition 11, except that the plasticizer, the curing catalyst, and the amounts were as shown in Table 2.

Table 2 summarizes the preparation conditions of the silane-modified polyolefins A-1 to A-14 as Examples 1 to 12 and Comparative Examples 1 to 6 and the results of the various measurements and evaluations described above.

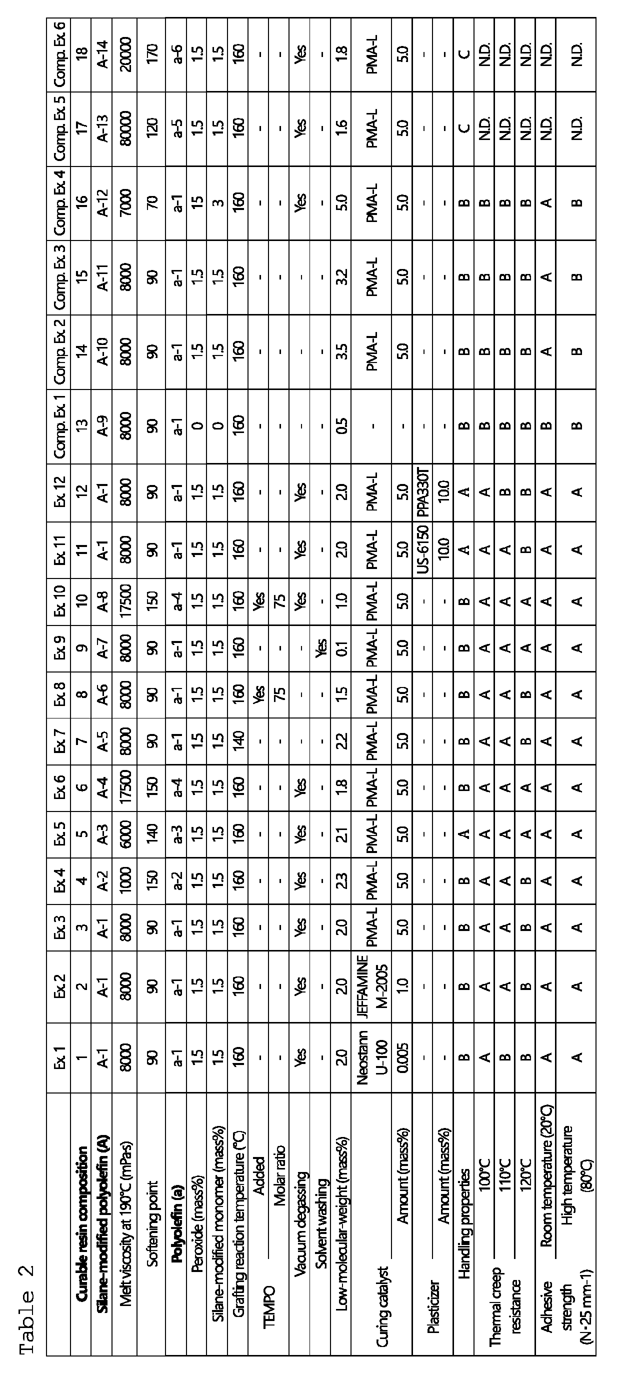

As is clear from Examples 1 to 12 and Comparative Examples 1 to 6, the curable resin compositions of the present invention have excellent handling properties, adhesive strength in a high-temperature environment, and creep characteristics. In the creep test at 120°C, Example 6 showed a decrease 5 hours after the starting time of the test. Example 10 showed a decrease 18 hours after the starting time. Example 10, which had a lower low-molecular-weight component content, showed excellent results in terms of creep characteristics at 120°C.

The curable resin composition for use in the present invention is useful as a starting material for a hot-melt adhesive and can be suitably used as a hot-melt adhesive having excellent handling properties, adhesive strength in a high-temperature environment, and creep characteristics.

## Claims

1. A curable resin comprising a moisture-curable modified polyolefin (A) in which a moisture-curable functional group is grafted onto a polyolefin (a),
the resin component having
a melt viscosity at 190°C of 30000 mPa·s or less,
a softening point of 70 to 160°C, and
a low-molecular-weight component of 2.5 mass% or less when extracted with acetone.

2. The curable resin according to claim 1, wherein the polyolefin (a) is a homopolypropylene or a propylene copolymer.

3. A curable resin composition comprising the curable resin of claim 1 and a curing catalyst having a number average molecular weight of 1500 or more.

4. The curable resin composition according to claim 3, further comprising a plasticizer having a number average molecular weight of 1500 to 100000.

5. A hot-melt adhesive comprising the curable resin of claim 1 or 2 or the curable resin composition of claim 3 or 4.
